# EUROPÄISCHE PATENTANMELDUNG

(11) **EP 1 617 087 A1**
(43) Veröffentlichungstag der Anmeldung: **18.01.2006**
(21) Anmeldenummer: 04016376.8
(22) Anmeldetag: 13.07.2004
(51) Int. Cl.: F16B 7/04, F16B 2/06

(54) **Trageinrichtung**

(71) Anmelder: NORGREN Automotive GmbH, 65462 Ginsheim-Gustavsburg (DE)
(72) Erfinder: Oerder, Markus, 61479 Glashütten (DE); Huppmann, Sascha, 55278 Mommenheim (DE); Boettcher, Michael, 65396 Walluf (DE); Strzempek, Otto, 65366 Geisenheim (DE)
(74) Vertreter: Quermann, Helmut

(57) **Zusammenfassung**

Die Erfindung beschreibt eine Trageinrichtung (1), insbesondere zur Anbringung an Roboterarmen und für die Anbindung von Werkzeugen, wie Spann-, Greif-, Saugeinrichtungen und sonstigen Hilfsmitteln, wie Ventilen, Sensoren oder dergleichen. Sie weist mindestens ein zweiteiliges Lagerelement (2) und eine im Lagerelement zwischen den Lagerelementteilen (9, 16) klemmend gehaltene, profilierte Stange (3) auf. Die Stange ist mit mindestens einer hinterschnittenen Nut (4) versehen. Sie weist mindestens eine in Längsrichtung der Nut positionierbares und mit der Stange verspannbares Klemmstück (7) auf. Das Klemmstück weist eine Öffnung (34) auf. Ein mit dem Lagerelement verbundenes Positionierteil (28) greift in die Öffnung (34) ein. Das Positionierteil ist mit einer Sollbruchstelle (32) versehen.

## Beschreibung

Die Erfindung betrifft eine Trageinrichtung, insbesondere zur Anbringung an Roboterarmen und für die Anbindung von Werkzeugen, wie Spann-, Greif-, Saugeinrichtungen und sonstigen Hilfsmitteln, wie Ventilen, Sensoren oder dergleichen.

Eine solche Trageinrichtung ist aus der EP 1 041 295 A1 bekannt. Sie weist mindestens zwei Stangen auf, die durch an das Profil der Stangen angepasste, mindestens zweiteilige Klemmstücke lösbar miteinander verbindbar sind. Die jeweilige Stange ist mit mindestens einer hinterschnittenen Nut versehen. In der Nut ist eine in dieser verspannbaren Justierleiste angeordnet. Sowohl im Klemmstück als auch in der Justierleiste sind Justierbohrungen angeordnet. Diese können durch relatives Verschieben von Justierleiste und Klemmstück in eine fluchtende Anordnung gebracht werden. In dieser Position dienen sie der Aufnahme eines Justierstiftes.

Mit einer solchen Trageinrichtung lassen sich Justierungsvorgaben zunächst unabhängig von den Klemmstücken an den Stangen vornehmen und es sind dann die Klemmstücke orientiert in den eingestellten Positionen platzier- und fixierbar. Nach abgeschlossener Positionierung des Klemmstücks wird der Justierstift entfernt.

Nachteilig ist bei der bekannten Trageinrichtung, dass eine durch äußere Kräfte, beispielsweise, bei einer Fehlfunktion des Roboters, bewirkte Verschiebung von Klemmstück und Justierleiste nicht von außen erkannt werden kann. Des weiteren besteht keine Möglichkeit, die Klemmstücke in unterschiedlichen Winkelpositionen bezüglich der Stange zu positionieren.

Aufgabe der Erfindung ist es, eine Trageinrichtung zu schaffen, bei der das Lagerelement und die Stange eindeutig zueinander positionierbar sind, und eine ungewollte Verschiebung der Stange, insbesondere in deren Längsrichtung, bezüglich des Lagerelements unmittelbar erkannt werden kann.

Die Erfindung schlägt zur Lösung dieser Aufgabe eine Trageinrichtung vor, insbesondere zur Anbringung an Roboterarmen und für die Anbindung von Werkzeugen, wie Spann-, Greif-, Saugeinrichtungen und sonstigen Hilfsmitteln, wie Ventilen, Sensoren oder dergleichen, mit einem mindestens zweiteiligen Lagerelement und einer im Lagerelement zwischen den Lagerelementteilen klemmend gehaltenen, profilierten Stange, wobei die Stange mit mindestens einer hinterschnittenen Nut versehen ist, sowie die Stange mindestens ein in Längsrichtung der Nut positionierbares und mit der Stange verspannbares Klemmstück aufnimmt, wobei das Klemmstück eine Öffnung aufweist, ein mit dem Lagerelement verbundenes Positionierteil in die Öffnung eingreift, sowie das Positionierteil mit einer Sollbruchstelle versehen ist.

Wesentlich ist bei der erfindungsgemäßen Trageinrichtung, dass das Klemmstück eine Öffnung aufweist, in das das mit dem Lagerelement verbundene Positionierteil eingreift. Bei diesem Positionierteil kann es sich um ein beliebig gestaltetes Formteil handeln. Es ist insbesondere daran gedacht, dass das Positionierteil als plattenförmiges Teil oder Stift ausgebildet ist. Die Sollbruchstelle des Positionierteils kann auf unterschiedliche Art und Weise bewerkstelligt werden. Sinn und Zweck der Gestaltung des Positionierteils mit der Sollbruchstelle ist es, dass, bei Einwirkung nicht gewünschter, erhöhter Kräfte zwischen Klemmstück und Lagerelement das Positionierteil beschädigt wird, insbesondere bricht, so dass diese Veränderung des Positionierteils die Verlagerung von Klemmstück und Lagerelement anzeigt. Damit ist ohne weiteres von außen eine Fehlfunktion, insbesondere eine ungewollte Bewegung des Roboters oder eine ungewollte Bewegung des Werkstücks, das dem Roboter zugeführt wird, ersichtlich.

In aller Regel ist die Sollbruchstelle als Dünnstelle des Positionierteils im Übergang vom Lagerelement zum Klemmstück ausgebildet. In diesem Bereich wird das Positionierteil bei einer Fehlfunktion somit brechen. Durch die Schaffung der definierten Bruchstelle wird verhindert, dass bei einer Fehlfunktion das Klemmstück oder das Lagerelement beschädigt werden.

Wesentlich ist bei der Erfindung ferner, dass das Positionierteil dauerhaft, somit während des Betriebs der Trageinrichtung, mit dem Lagerelement als auch mit dem Klemmstück zusammenwirkt.

Bei Ausbildung des Positionierteils als plattenförmiges Bauteil ist die Öffnung im Klemmstück insbesondere als quer zur Längserstreckung des Klemmstücks bzw. der Längserstreckung der Nut angeordneter Schlitz ausgebildet. Das Positionierteil ist dabei im wesentlichen spielfrei in die Öffnung im Klemmstück einsteckbar. Dies bedeutet, dass das Positionierteil nicht nur bei einer Längsverschiebung zwischen Klemmstück und Lagerelement bricht, sondern auch bei einer ungewollten Relativ-Drehbewegung dieser Teile, somit einer Bewegung der Teile um die Längsachse der Stange.

Grundsätzlich könnte das Positionierteil eine bauliche Einheit mit dem Lagerelement, insbesondere mit einem Lagerelementteil bilden. Gemäß einer bevorzugten Ausführungsform der Erfindung ist aber vorgesehen, dass das Positionierteil als separates Bauteil ausgebildet ist, das mittels Befestigungsmitteln mit dem Lagerelement verbindbar ist. Die Befestigung des Positionierteils am Lagerelement erfolgt insbesondere durch Schrauben.

Die Ausbildung des Positionierteils als separates Bauteil ermöglicht ein wesentlich größeres Spektrum der Positionierung von Lagerelement und Stange. So ist insbesondere vorgesehen, dass das Positionierteil einen Scheibenabschnitt mit Rastierungen aufweist und das Lagerelement mit komplementären Rastierungen versehen ist. Dies geschieht zum Positionieren des Positionierteils in unterschiedlichen Positionen, insbesondere unterschiedlichen Winkelpositionen, bezüglich des Lagerelements. Der Scheibenabschnitt ist zweckmäßig kreisbogenförmig gestaltet und es greift ein weiterer Scheibenabschnitt des Positionierteils in die Öffnung des Klemmstücks ein. Mit dem Lagerelement ist insbesondere eine Deckplatte verbindbar, insbesondere verschraubbar, wobei die Deckplatte auf ihrer dem Lagerelement zugewandten Seite die komplementäre Rastierung aufweist und das Positionierteil zwischen der Deckplatte und dem Lagerelement geklemmt ist.

Somit kann das Positionierteil in unterschiedlichen Winkelpositionen bezüglich des Lagerelements angeordnet und in der jeweiligen gewünschten Winkelposition mittels der Deckplatte fixiert werden. Das Lagerelement kann damit die Stangen in unterschiedlichen Winkelstellungen, bezogen auf deren Längsachse, positioniert aufnehmen. Dies steigert die Variabilität der Trageinrichtung erheblich und ermöglicht eine sehr flexible Anbindung an den Roboter bzw. an die Werkzeuge und sonstige Hilfsmittel.

Es wird als besonders vorteilhaft angesehen, wenn sich die Rastierung über einen solchen Winkel erstreckt, dass die Stange bezüglich deren Längsachse um einen Winkel von bis zu 100° schwenkbar ist.

Eine bevorzugte Weiterbildung der Erfindung sieht vor, dass das Lagerelement der Aufnahme von mehreren, insbesondere der Aufnahme von zwei Stangen dient. Insbesondere sind mindestens zwei Stangen im rechten Winkel zueinander angeordnet. Insbesondere ist in jedem Lagerungsbereich der jeweiligen Stange im Lagerelement das vorgeschriebene Positionierteil zugeordnet. Hiermit stellt sich die Trageinrichtung, auf alle Stangen bezogen, äußerst flexibel dar.

Die jeweilige bei der Trageinrichtung Verwendung findende Stange weist im wesentlichen Kreisquerschnitt oder rechteckigen Querschnitt, insbesondere quadratischen Querschnitt auf.

Gemäß einer bevorzugten Ausbildung ist vorgesehen, dass eine erste Stange zwischen zwei miteinander verbundenen Montagewinkeln klemmend gehalten ist und mit den Montagewinkeln Spannstücke verbunden sind, wobei zwischen den Spannstücken und den Montagewinkeln die zweite Stange klemmend gehalten ist.

Gemäß einer anderen bevorzugten Variante ist vorgesehen, dass eine erste Stange zwischen einem Montageelement und einem ersten Spannstück klemmend gehalten ist und eine zweite Stange zwischen dem Montagelement und einem zweiten Spannstück klemmend gehalten ist.

Gemäß einer dritten bevorzugten Variante ist vorgesehen, dass eine erste Stange zwischen einem Montageelement und einem ersten Spannstück klemmend gehalten ist und eine zweite Stange über Kulissensteine klemmend in dem Montagelement gehalten ist. Im Bereich der Kulissensteine findet somit kein Positionierteil Verwendung.

Das jeweilige Klemmstück ist insbesondere als Nutenstein ausgebildet. Eine besondere Weiterbildung der Erfindung sieht vor, dass das jeweilige Klemmstück mit mehreren Öffnungen versehen ist. Dieses Klemmstück weist somit eine sehr große Länge auf, erstreckt sich unter Umständen über die Länge der Stange. Ein solches Klemmstück weist insbesondere Öffnungen in einem Abstand von 50 mm auf. Dies ermöglicht es, bei einmaliger Positionierung des Klemmstücks in der Stange unmittelbar eine Vielzahl von Lagerelementen bezüglich der Öffnungen im Klemmstück auszurichten.

Die Stange kann an unterschiedlichen Stellen mit den Nuten zur Aufnahme der Klemmstücke versehen sein. Die Nuten sind im Bereich der Seitenflächen der Stange oder, bei eckiger Ausbildung der Stangen durchaus auch im Bereich der Ecken angeordnet.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand diverser Ausführungsformen beispielsweise dargestellt, ohne auf diese beschränkt zu sein. Es stellt dar:
- Figur 1:: eine erste Ausführungsform der erfindungsgemäßen Trageinrichtung, veranschaulicht in einer räumlichen Ansicht,
- Figur 2:: eine Ansicht der in Figur 1 gezeigten Trageinrichtung, in Längsrichtung der horizontalen Stange gesehen,
- Figur 3:: eine Explosionsdarstellung der in den Figuren 1 und 2 gezeigten Trageinrichtung, in einer räumlichen Ansicht gesehen,
- Figur 4:: eine zweite Ausführungsform der erfindungsgemäßen Trageinrichtung, veranschaulicht in einer räumlichen Ansicht,
- Figur 5:: eine Ansicht der in Figur 4 gezeigten Trageinrichtung, in Längsrichtung der horizontalen Stange gesehen,
- Figur 6:: eine Explosionsdarstellung der in den Figuren 4 und 5 gezeigten Trageinrichtung, in einer räumlichen Ansicht gesehen,
- Figur 7:: eine dritte Ausführungsform der erfindungsgemäßen Trageinrichtung, veranschaulicht in einer räumlichen Ansicht,
- Figur 8:: eine Ansicht der in Figur 7 gezeigten Trageinrichtung, in Richtung der Längsachse der oberen horizontalen Stange gesehen,
- Figur 9:: eine Explosionsdarstellung der in den Figuren 7 und 8 gezeigten Trageinrichtung, in einer räumlichen Ansicht gesehen,
- Figur 10:: eine räumliche Ansicht der bei der dritten Ausführungsform Verwendung findenden unteren, horizontalen Stange, mit modifiziertem, langem in eine Nut der Stange eingesetztem Klemmstück sowie diversen Positionierteilen, in einer räumlichen Ansicht,
- Figur 11:: eine Draufsicht der Anordnung gemäß Figur 10 und
- Figur 12:: eine räumliche Ansicht des in den Figuren 10 und 11 gezeigten Klemmstücks und der diversen Positionierteile.

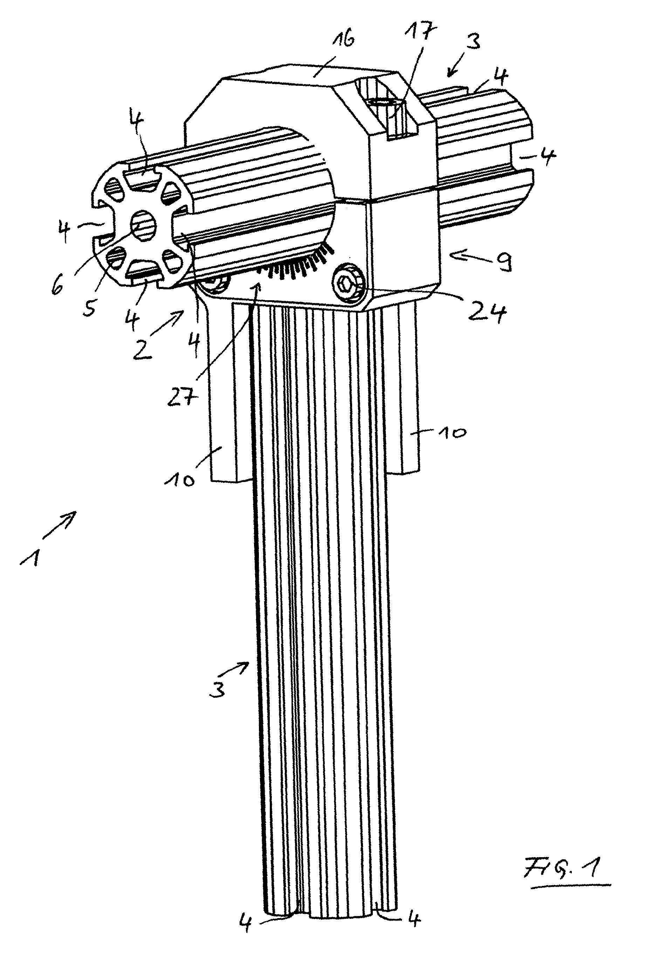

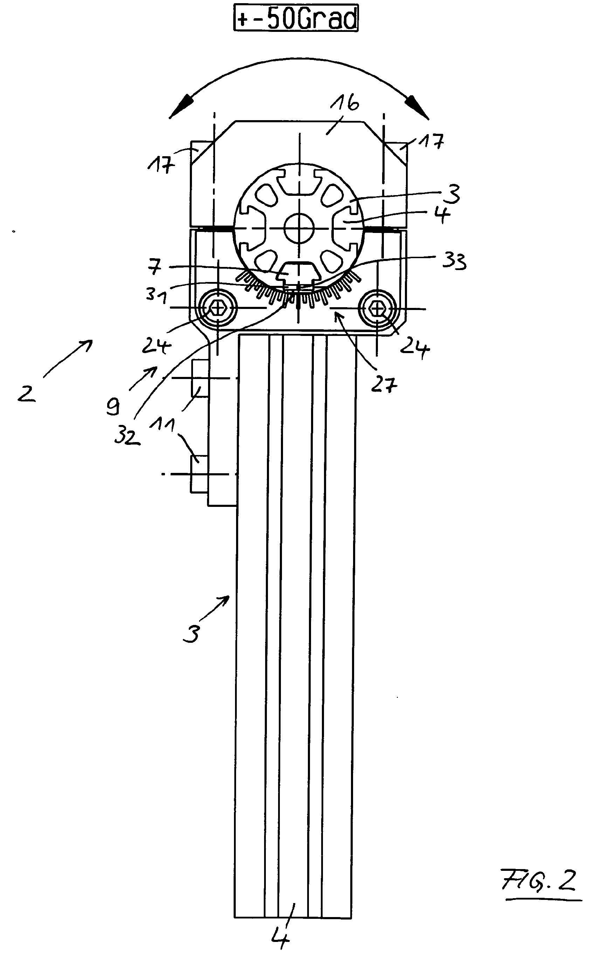

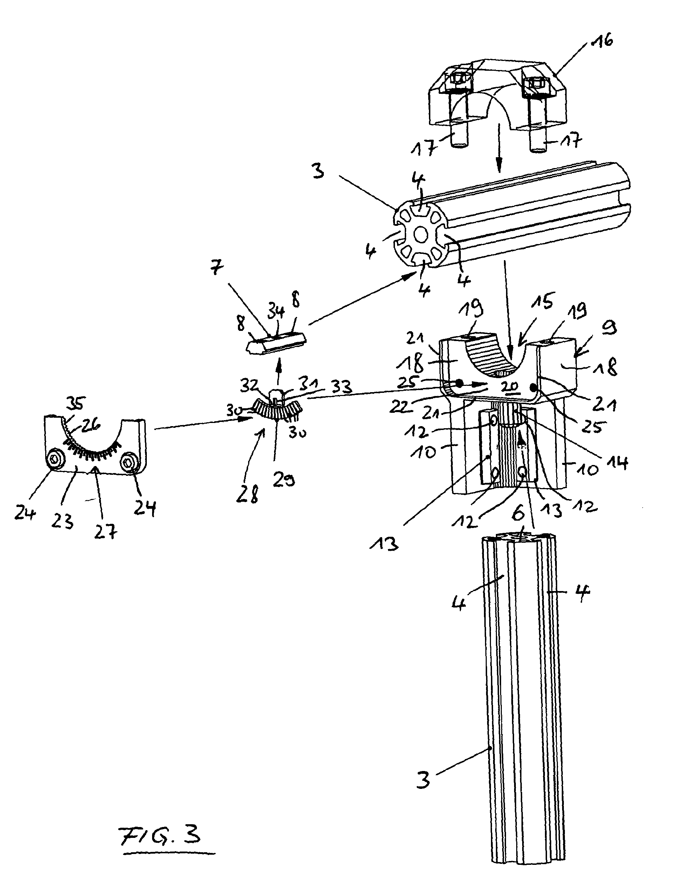

Die in den Figuren 1 bis 3 beschriebene Trageinrichtung 1 dient der Anbringung an Roboterarmen und für die Anbindung von Werkzeugen, wie Spann-, Greif-, Saugeinrichtungen und sonstigen Hilfsmitteln, wie Ventilen, Sensoren oder dergleichen.

Sie weist ein zweiteiliges Lagerelement 2 sowie zwei im rechten Winkel zueinander angeordnete, im Lagerelement klemmend gehaltene, profilierte Stangen 3 auf. Bezogen auf die Orientierung der Figuren 1 bis 3 ist die eine Stange 3 vertikal, die andere Stange 3 horizontal angeordnet. Bei der jeweiligen Stange 3 handelt es sich um ein im wesentlichen kreisförmigen Querschnitt aufweisendes Hohlprofil. Am Umfang der jeweiligen Stange 3 sind vier sich über die Länge der Stange 3 erstreckende Nuten 4 angeordnet, die als hinterschnittene Nuten ausgebildet sind. Zwischen benachbarten Nuten 4 weist die Stange 3 einen Hohlraum 5 auf, ferner ist die Stange mit einem zentralen Hohlraum 6 versehen. Die Hohlräume 5 und 6 erstrecken sich gleichfalls über die gesamte Länge der Stange. Die hinterschnittenen Nuten 4 dienen der Aufnahme von Klemmstücken 7, wobei das jeweilige Klemmstück 7 mit zwei Gewindebohrungen 8 versehen ist. Mittels dieser Klemmstücke 7 erfolgt über geeignete Mittel die Anbringung an Roboterarmen oder die Anbindung von Werkzeugen.

Demgegenüber betrifft die vorliegende Erfindung die Verbindung, Lagerung und besondere Positionierung der beiden Stangen 3 aneinander:
Die vertikale Stange 3 ist in einem ersten Teil 9 des Lagerelements 2 gehalten. Dieses Teil 9 weist einen Winkelansatz 10 zur Anlage der Stange 3 im Bereich zweier der vier Nuten 4 dieser Stange auf. Jedem Schenkel des Ansatzes 10 sind zwei übereinander angeordnete Bohrungen zugeordnet. Diese durchsetzen Schrauben 11, die in Gewindebohrungen 12 von zwei Klemmstücken 13 eingeschraubt sind. Bei relativ gelösten Schrauben 11 wird die vertikale Stange 3 in das Teil 9 eingeschoben, wobei die Klemmstücke 13 in die zugeordneten beiden Nuten 4 eingreifen und ein Zentrierzapfen 14 des Teils 9 in den kreisförmigen Querschnitt aufweisenden Hohlraum 6 eingreift. Dann werden die Schrauben 11 angezogen, womit die feste Verbindung zwischen unterer Stange 3 und Teil 9 bewirkt wird.

Das Teil 9 ist im Bereich seines oberen Endes als Halbschale 15 ausgebildet, die der Aufnahme der oberen Stange 3 dient. Zum Fixieren der oberen Stange 3 weist das Lagerelement 2 ein zweites Teil 16 auf, das entsprechend halbschalenförmig gestaltet ist und mit zwei Bohrungen versehen ist, die der Aufnahme von Schrauben 17 dienen. Die der Halbschale 15 des ersten Teils 9 zugeordneten Schenkel 18 sind mit Gewindebohrungen 19 zur Aufnahme der Gewindeabschnitte der Schrauben 17 versehen.

Das Teil 9 weist im Bereich der beiden Schenkel 18 und des diese verbindenden Stegs 22 einen Rücksprung 20 auf, so dass im Bereich der Außenkontur des Teils 9 in diesem Bereich ein vorstehender, U-förmiger Rand 21 gebildet ist.

Der Rücksprung 20 dient der Aufnahme einer Deckplatte, die entsprechend der Anordnung der beiden Schenkel 18 und des Stegs 22 U-förmig gestaltet ist. Die Deckplatte 23 ist mit zwei Bohrungen zum Durchstecken von Schrauben 24 versehen, die in Gewindebohrungen 25 im Bereich der Übergänge von den Schenkeln 18 zum Steg 22 einschraubbar sind. Außen ist die Deckplatte 24 im Bereich des kreisförmigen Randes 26 mit einer Skalierung 27 versehen. Auf der der Skalierung 27 abgewandten Seite der Deckplatte 24, somit auf der Seite, die dem Rücksprung 20 zugewandt ist, ist die Deckplatte 23 mit Rastzähnen 35 versehen.

Mit diesen Rastzähnen 35 wirkt ein Positionierteil 28 zusammen, das zwischen die Deckplatte 23 und das Teil 9 im Bereich des Rücksprungs 20 eingeklemmt wird. Das Positionierteil 28 weist einen Scheibenabschnitt 29 mit Rastzähnen 30 auf, die mit den Rastzähnen 35 der Deckplatte 23 zusammenwirken. Dies ermöglicht es, das Positionierteil 28 in unterschiedlichen Stellungen bezüglich der Deckplatte 23, somit bezüglich der Halbschale 15 formschlüssig anzuordnen. - Das Positionierteil 28 weist ferner einen, bezogen auf die kreisbogenförmige Krümmung des Scheibenabschnitts 29, radial nach innen weisenden weiteren Scheibenabschnitt 31 auf. Dieser ist als Plättchen ausgebildet und über eine Sollbruchlinie 32 mit dem Scheibenabschnitt 29 verbunden. In einem zentralen Bereich weist der Scheibenabschnitt 31, von der Sollbruchlinie 32 ausgehend, einen Skalenstrich 33 auf. Demzufolge ist die Position des Positionierteils 28 bezüglich der Skalierung 27 der Deckplatte 23 auf einfache Art und Weise mit Blick auf die Deckplatte 23 von außen zu erkennen.

Die horizontale Stange 3 nimmt ein in Längsrichtung einer der Nuten 4 verspannbares Klemmstück 7 auf. In die beiden Gewindebohrungen 8 dieses Klemmstücks 7 werden zwei Schrauben, insbesondere Madenschrauben, eingeschraubt, die sich am Grund der Nut 4 abstützen und damit das Klemmstück 7 gegen den Hinterschnitt verspannen. Dieses ist somit in Längsrichtung der Nut fixiert. Das Klemmstück 7 weist zusätzlich, quer zu dessen Längserstreckung, einen Schlitz 34 auf, der das Klemmstück 7 beispielsweise durchsetzt. Montiert wird die obere Stange 3 mit dem in dieser verspannten Klemmstück 7 wie folgt:
Zunächst wird das Positionierteil 28 zwischen der Deckplatte 23 und dem Teil 9 angeordnet und die Deckplatte 23 mittels der Schrauben 24 lose befestigt. Dann wird das Positionierteil 28 in die gewünschte Winkelposition relativ zur Deckplatte 23 gebracht und es werden die beiden Schrauben 24 angezogen, so dass das Positionierteil 28 fest zwischen der Deckplatte 23 und dem Teil 9 geklemmt ist. Dann wird die obere Stange 3 mit dem mit dieser verklemmten Klemmstück 7 in die Halbschale 15 eingelegt, derart, dass der Scheibenabschnitt 31 des Positionierteils 28 in den Schlitz 34 des Klemmstücks 7 eingeführt wird. An sich wird das Teil 16 des Lagerelements 2 auf das andere Teil 9 des Lagerelements aufgesetzt und mittels der beiden Schrauben 17 verschraubt. Damit ist die obere Stange 3 definiert - winkelorientiert bezüglich der Längsachse der oberen Stange 3 - im Lagerelement 2 gelagert. Die Winkellage kann auf einfache Art und Weise variiert werden, indem die Schrauben 17 und 24 etwas gelöst und das Positionierteil 28 bezüglich der Deckplatte 23 verschwenkt wird. Anschließend werden diese Schrauben wieder angezogen. Es ist so eine starre Verbindung zwischen oberer Stange 3 und Lagerelement 2 bewerkstelligt, bei eindeutiger Positionierung der Stange in deren Längsrichtung und bezüglich deren Verdrehung, wegen des im wesentlichen spielfreien Eingriffs des Scheibenabschnitts 31 in den Schlitz 34 des Klemmstücks.

Die Rastzähne 35 der Deckplatte 23 erstrecken sich über einen Winkel von nahezu 180°. Es lässt sich hierdurch eine dauerhaft rastierte Verschwenkbarkeit des Positionierteils 28 bezüglich der Deckplatte 23 von etwa 100° erreichen, nämlich, ausgehend von einer neutralen Stellung, jeweils um 50° im Uhrzeigersinn und 50° entgegen dem Uhrzeigersinn.

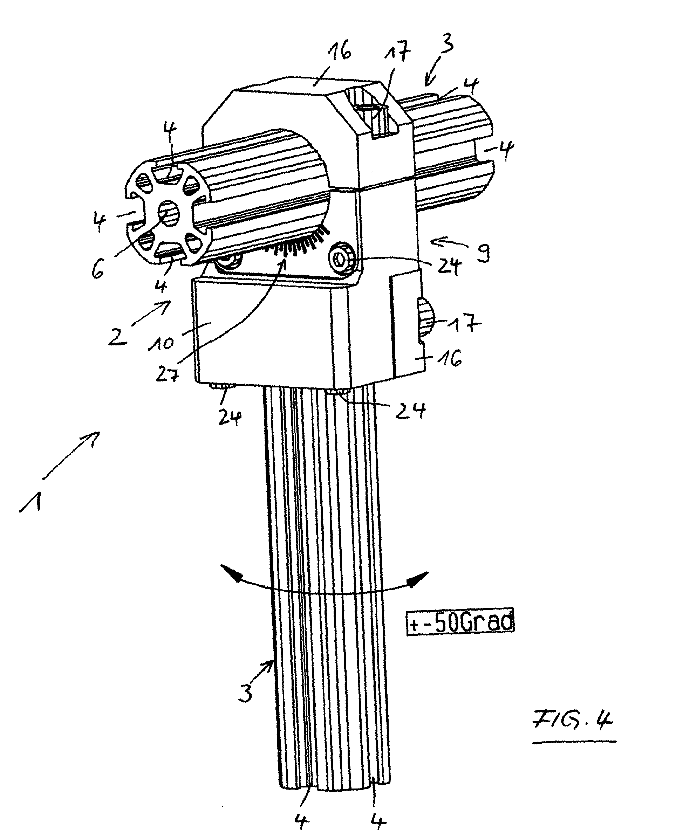

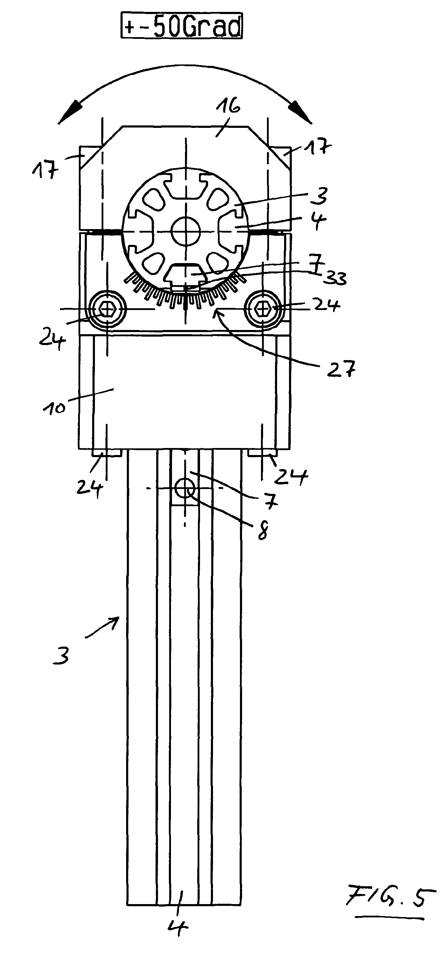

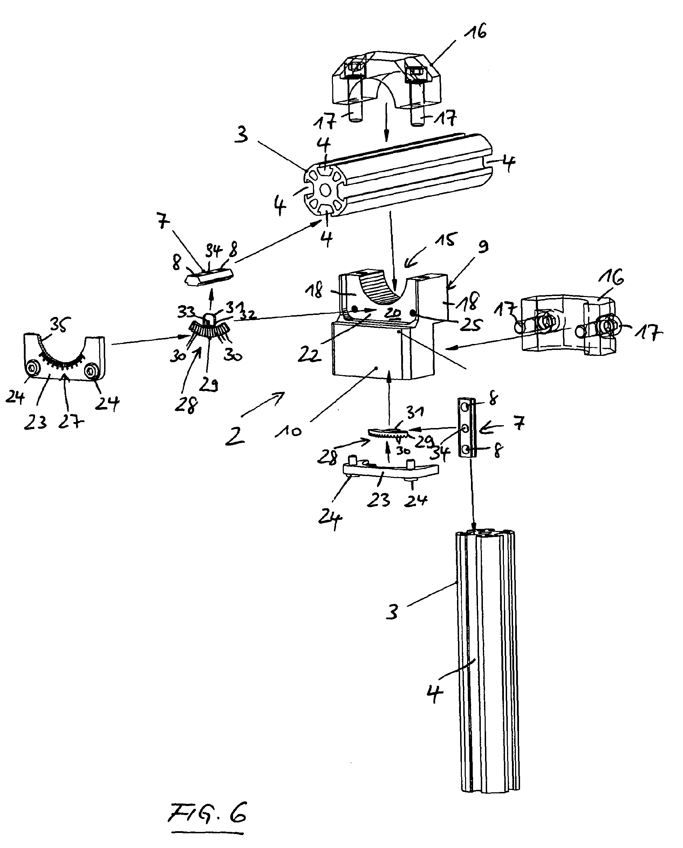

Die Ausführungsform nach den Figuren 4 bis 6 unterscheidet sich von derjenigen nach den Figuren 1 bis 3 im wesentlichen dadurch, dass auch die untere, vertikale Stange 3, entsprechend der oberen, horizontalen Stange 3, aufgrund eines der unteren Stange 3 zugeordneten Positionierteils 28 in beliebigen Stellungen positionierbar ist. Insofern sind Bauteile gemäß dieser Ausführungsform, die mit solchen der ersten Ausführungsform übereinstimmen, mit denselben Bezugsziffern bezeichnet. Dies gilt auch für die spätere Erörterung der anderen Ausführungsformen.

Bei der Ausführungsform nach den Figuren 4 bis 6 ist der Ansatz 10 des Teils 9 des Lagerelements 2 entsprechend der Halbschale 15, die durch die beiden Schenkel 18 und den diese verbindenden Steg 22 gebildet ist, gestaltet und es ist dieser Bereich mit einem Rücksprung, entsprechend dem Rücksprung 20, zur Aufnahme von Deckplatte 23 und Positionierteil 28 versehen, wobei letztgenanntes in das Klemmstücks 7 eingreift, dass mit der senkrecht angeordneten unteren Stange 3 verspannt ist. Entsprechend ist, genauso wie bei der oberen, horizontalen Stange 3, ein zweites Teil 16 des Lagerelements 2 vorgesehen, das mittels Schrauben 17 mit dem Ansatz 10 verschraubbar ist, so dass die untere Stange 3 zwischen diesem Teil 16 und dem Ansatz 10 geklemmt ist. Bei dieser Ausführungsform ist, bezogen auf die untere, vertikale Stange 4, der Abschnitt 31 des Positionierteils 28 als Stift mit Sollbruchstelle 32 gestaltet, wobei der Stift 31 in die Kreisquerschnitt aufweisende, dem Stift angepasste Öffnung 34 des Klemmstücks 7 eingreift.

Dadurch, dass auch die untere Stange 3 um deren Längsachse um den vorgeschriebenen Winkel von 100° verschwenkbar positioniert werden kann, ergibt sich eine besonders große Flexibilität bei der Trageinrichtung. So ist nicht nur die Schwenkbarkeit der oberen Stange 3 um 100°, sondern auch der unteren Stange 3 um 100° bezüglich des Lagerelements 2 möglich.

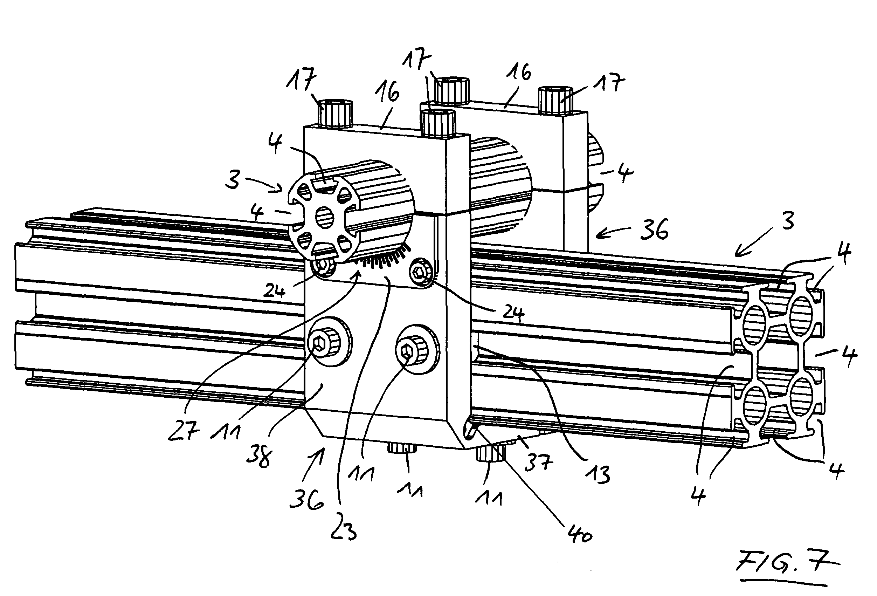

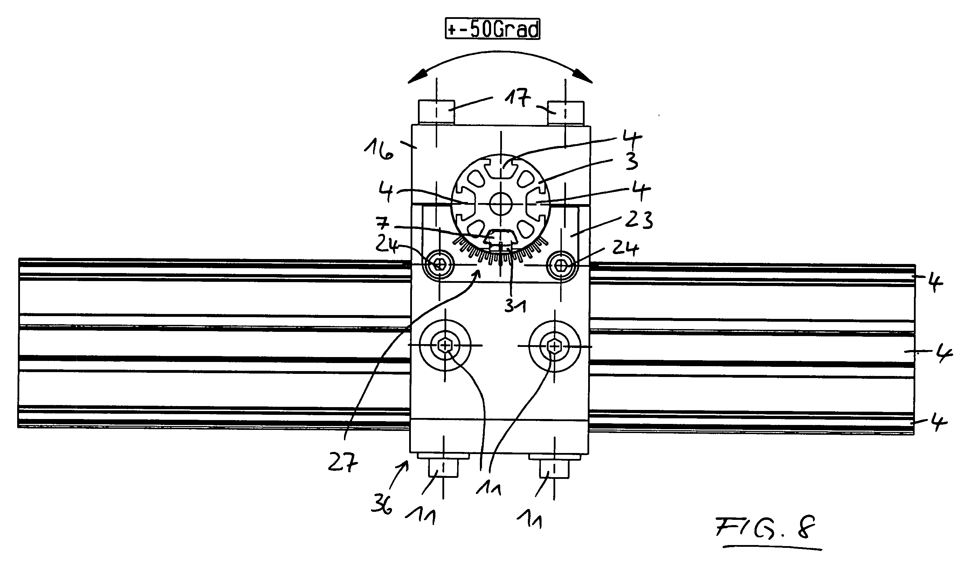

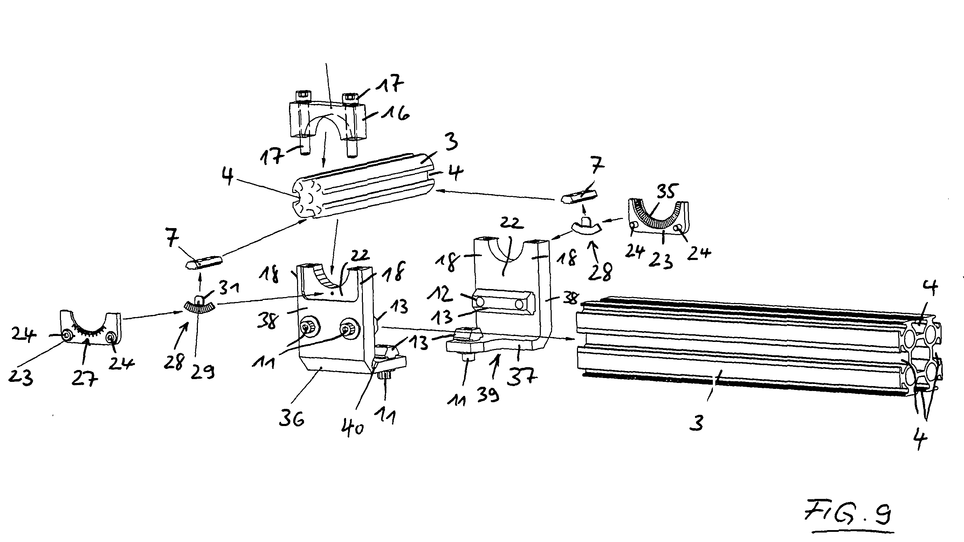

Bei der dritten Ausführungsform nach den Figuren 7 bis 9 dient das Lagerelement 2 der Lagerung einer horizontal angeordneten unteren Stange 3, die einen quadratischen Querschnitt aufweist und einer oberen horizontal angeordneten, senkrecht zur unteren Stange angeordneten Stange 3, die den vorstehend diskutierten kreisförmigen Querschnitt aufweist.

Die untere Stange 3 ist gleichfalls als Profilstange ausgebildet. Im Bereich der Ecken des Hohlprofils sind vier sich über die Länge der Stange 3 verlaufende Nuten 4 vorgesehen. Vier weitere Nuten 4 erstrecken sich gleichfalls über die Länge der Stange 3, sie sind im Bereich einer Seitenfläche der Stange 3, somit jeweils zwischen zwei Ecknuten 4 angeordnet. Die Nuten sind jeweils als hinterschnittene Nuten ausgebildet und dienen der Aufnahme der Gewindebohrungen 12 aufweisenden Klemmstücke 13. Bei dieser Ausführungsform ist das Lagerelement vierteilig ausgebildet. Es sind zwei L-förmige Teile 36 vorgesehen, von denen jeder Schenkel 37 bzw. 38 zwei Bohrungen aufweist, die von zwei Schrauben 11 durchsetzt sind. Die Schrauben sind in die Klemmstücke 13 lose eingeschraubt. Die beiden Schenkel 37 der Teile 36 überlappen sich etwas, so dass aufgrund der kürzeren Gestaltung der dort befindlichen Klemmstücke 13 diese in die gemeinsame, untere, mittlere Nut 4 der unteren Stange 3 eingeschoben werden können. Gleichzeitig werden die beiden anderen Klemmstücke 13, die den Schenkeln 38 zugeordnet sind, in die seitlichen, mittleren Nuten 4 der Stange 3 eingeschoben. Aufgrund der Rücksprünge 39 der beiden Schenkel 37 der Teile 36 können diese gegeneinander positioniert werden, so dass beim Anziehen der Klemmstücke 13, die den Teilen 36 zugeordnet sind, diese fest mit der unteren Stange 3 verspannt werden.

Die Schenkel 38 sind in dem Bereich ihrer oberen Enden entsprechend der zur ersten Ausführungsform beschriebenen Halbschale 15 gestaltet, weisen somit die beiden Schenkel 18, den diese verbindenden Steg 22 und den Rücksprung 20 auf. In diesen Rücksprung ist die Deckplatte 23 einsetzbar, mit zwischen der Deckplatte und dem Rücksprung angeordnetem Positionierteil 28. Somit sind bei dieser Ausführungsform zwei Positionierteile für die obere Stange 3 vorgesehen. Entsprechend wird diese Stange mittels zweier Teile 16 und diesen zugeordneter Schrauben 17 geklemmt. Diese Ausführungsform beschreibt somit eine Kreuzklemme mit unterschiedlichen Profilen, einerseits ein quadratisches, stärkeres Profil, andererseits einen Kreisquerschnitt aufweisendes schwächeres Profil, wobei das schwächere Profil um die vorbeschriebenen 100°, bezogen auf eine Verschwenkung bezüglich der Längsachse der oberen Stange 3 positionierbar ist.

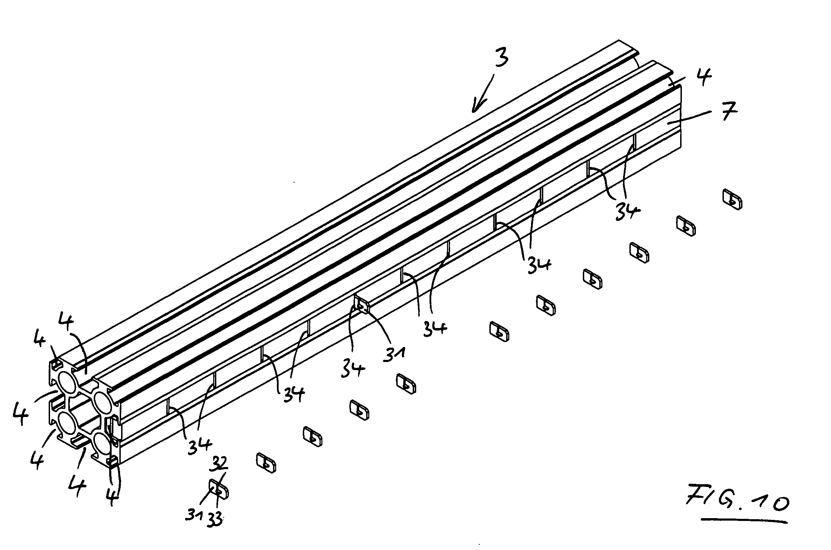

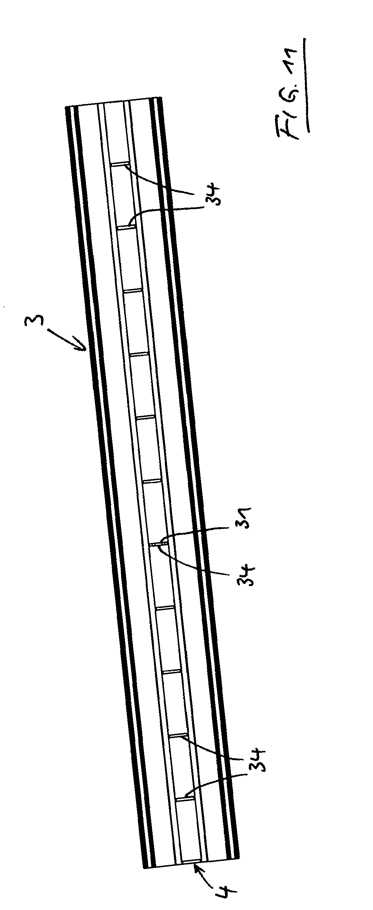

Die Ausführungsform nach den Figuren 10 bis 12 zeigt, dass, dies gilt insbesondere für den Anwendungsfall des Profils mit rechteckigem Querschnitt, die Nut der Stange 3, beispielsweise die veranschaulichte Mittelnut, ein Klemmstück 7 besonders großer Länge aufnehmen kann. Es wird über nicht näher veranschaulichte Spannmittel, insbesondere Schrauben, mit der Stange 3 verspannt, oder mit dieser in einer definierten Position verbunden, z. B. vernietet. Das Klemmstück 13 weist eine Vielzahl von Schlitzen 34 auf, die insbesondere in einem Abstand von 50 mm angeordnet sind. Dies ermöglicht es, Positionierteile 28 und damit Lagerelemente 2, die die Positionierteile 28 aufnehmen, in einem bestimmten Rasterabstand bezüglich der Stange 3 zu positionieren. Auf diese Art und Weise ist ein schnelles Positionieren der Lagerelemente 2 an unterschiedlichen Stellen, allerdings auf den konkreten Rasterabstand bezogen, möglich.

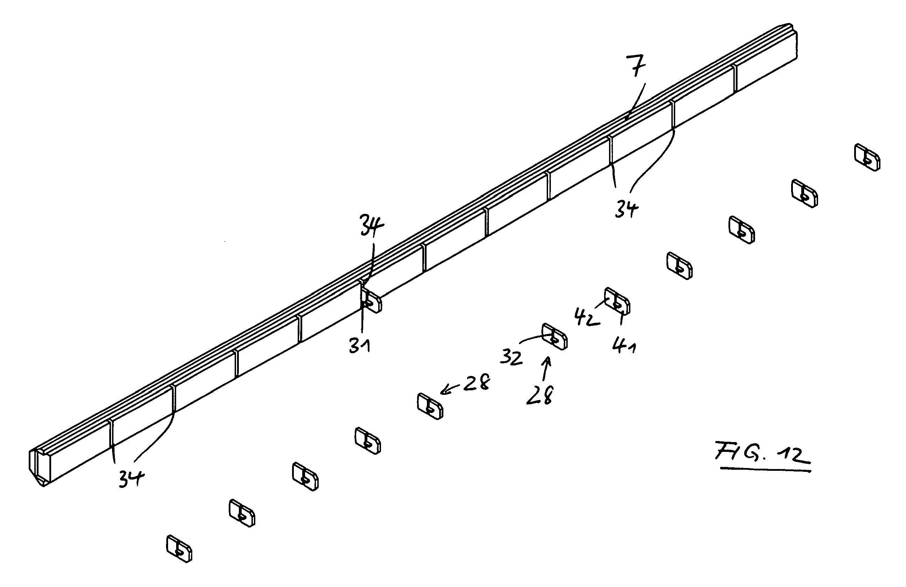

Wie der Darstellung der Figuren 7 bis 9 bezüglich der dritten Ausführungsform zu entnehmen ist, ist das Teil 36 im Bereich des Übergangs vom Schenkel 37 zum Schenkel 38 mit einer stirnseitigen Ausfräsung 40 versehen. Diese dient der Aufnahme des in Figur 12 gezeigten Positionierteils 28, das als Blättchen mit der Sollbruchstelle 32 versehen ist. Das Positionierteil 28 wird im Bereich seiner einen Hälfte 41 an die Grundfläche der Ausfräsung 40 angelegt, die dort mit einer Gewindebohrung versehen ist. Entsprechend ist die Hälfte 41 des Positionierteils 28 mit einem Loch versehen, so dass das Positionierteil mittels einer Schraube im Bereich der Ausfräsung 40 befestigt werden kann. Dieses Positionierteil 28 ist somit der im Bereich einer Ecke des Profils angeordnete Nut 4 zugeordnet. Diese Nut 4 nimmt das in der Figur 12 veranschaulichte besonders lange Klemmstück 7 auf, das definiert positioniert ist und mit der Stange 3 verspannt ist. Beim Befestigen der Teile 36 greift die andere Hälfte 42 des Positionierteils 28 in den Schlitz 34 des Klemmstücks 7 ein.

## Patentansprüche

1. Trageinrichtung (1) insbesondere zur Anbringung an Roboterarmen und für die Anbindung von Werkzeugen, wie Spann-, Greif-, Saugeinrichtungen und sonstigen Hilfsmitteln, wie Ventilen, Sensoren oder dergleichen, mit einem mindestens zweiteiligen Lagerelement (2) und einer im Lagerelement (2) zwischen den Lagerelementteilen (9, 16; 9, 36; 9, 37) klemmend gehaltenen, profilierten Stange (3), wobei die Stange (3) mit mindestens einer hinterschnittenen Nut (4) versehen ist, sowie die Stange (3) mindestens ein in Längsrichtung der Nut (4) positionierbares und mit der Stange (3) verspannbares Klemmstück (7) aufnimmt, wobei das Klemmstück (7) eine Öffnung (34) aufweist, ein mit dem Lagerelement (2) verbundenes Positionierteil (28) in die Öffnung (34) eingreift, sowie das Positionierteil (28) mit einer Sollbruchstelle (32) versehen ist.

2. Trageinrichtung nach Anspruch 1, wobei die Öffnung (34) im Klemmstück (7) als quer zur Längserstreckung des Klemmstücks (7) bzw. der Längserstreckung der Nut (4) angeordneter Schlitz ausgebildet ist.

3. Trageinrichtung nach Anspruch 1 oder 2, wobei das Positionierteil (28) im wesentlichen spielfrei in die Öffnung (34) im Klemmstück (7) einsteckbar ist.

4. Trageinrichtung nach einem der Ansprüche 1 bis 3, wobei das Positionierteil (28) als separates Bauteil ausgebildet ist, das mittels Befestigungsmitteln (23, 24) mit dem Lagerelement (2) verbindbar ist.

5. Trageinrichtung nach Anspruch 4, wobei das Positionierteil (28) einen Scheibenabschnitt (29) mit Rastierungen (30) aufweist, zum Positionieren des Positionierteils (28) in unterschiedlichen Positionen, insbesondere unterschiedlichen Winkelpositionen, bezüglich des Lagerelements (2).

6. Trageinrichtung nach Anspruch 5, wobei der Scheibenabschnitt (29) kreisbogenförmig gestaltet ist und ein weiterer Scheibenabschnitt (31) des Positionierteils (28) in die Öffnung (34) des Klemmstücks (7) eingreift.

7. Trageinrichtung nach einem der Ansprüche 4 bis 6, wobei mit dem Lagerelement (2) eine Deckplatte (23) verbindbar, insbesondere verschraubbar ist, wobei die Deckplatte (23) auf ihrer dem Lagerelement (2) zugewandten Seite eine komplementäre Rastierung (35) aufweist und das Positionierteil (28) zwischen der Deckplatte (23) und dem Lagerelement (2) geklemmt ist.

8. Trageinrichtung nach einem der Ansprüche 5 bis 7, wobei sich die Rastierung (30, 35) über einen solchen Winkel erstreckt, dass die Stange (3) bezüglich deren Längsachse um einen Winkel von bis zu 100° schwenkbar ist.

9. Trageinrichtung nach einem der Ansprüche 1 bis 8, wobei das Lagerelement (2) der Aufnahme von zwei Stangen (3, 3) dient, die insbesondere im rechten Winkel oder parallel zueinander angeordnet sind.

10. Trageinrichtung nach einem der Ansprüche 1 bis 9, wobei die jeweilige Stange (3) im wesentlichen einen Kreisquerschnitt oder rechteckigen Querschnitt, insbesondere quadratischen Querschnitt aufweist.

11. Trageinrichtung nach einem der Ansprüche 1 bis 10, wobei eine erste Stange (3) in zwei Montagewinkeln (36, 36) klemmend gehalten ist und mit den Montagewinkeln (36, 36) Spannelemente (16, 16) verbunden sind, wobei zwischen den Spannelementen (16, 16) und den Montagewinkeln (36, 36) die zweite Stange (3) klemmend gehalten ist.

12. Trageinrichtung nach einem der Ansprüche 1 bis 10, wobei eine erste Stange (3) zwischen einem Montagelement (9) und einem ersten Spannelement (16) klemmend gehalten ist und eine zweite Stange (3) zwischen dem Montagelement (9) und einem zweiten Spannelement (16) klemmend gehalten ist.

13. Trageinrichtung nach einem der Ansprüche 1 bis 10, wobei eine erste Stange (3) zwischen einem Montageelement (9) und einem ersten Spannelement (16) klemmend gehalten ist und eine zweite Stange (3) über Spannstücke (13), insbesondere Kulissensteine, klemmend in dem Montageelement (9) gehalten ist.

14. Trageinrichtung nach einem der Ansprüche 1 bis 13, wobei jeder Stange (3) mindestens ein Positionierteil (28) zugeordnet ist.

15. Trageinrichtung nach einem der Ansprüche 1 bis 14, wobei das jeweilige Klemmstück (7) als Kulissenstein ausgebildet ist.

16. Trageinrichtung nach einem der Ansprüche 1 bis 15, wobei das jeweilige Klemmstück (7) mit mehreren Öffnungen (34, 34) versehen ist, insbesondere Öffnungen in einem Abstand von 50 mm.
